# EUROPEAN PATENT APPLICATION

(11) **EP 4 593 510 A1**
(43) Date of publication of application: **30.07.2025**
(21) Application number: 23867568.0
(22) Date of filing: 20.09.2023
(51) Int. Cl.: H04W 74/08

(54) **METHOD EXECUTED BY USER EQUIPMENT AND USER EQUIPMENT**

(30) Priority: 23.09.2022 CN 202211169367
(71) Applicant: Sharp Kabushiki Kaisha, Sakai City, Osaka 590-8522 (JP)
(72) Inventor: LIU, Renmao, Pudong, Shanghai 201206 (CN); LUO, Chao, Pudong, Shanghai 201206 (CN); MA, Xiaojun, Pudong, Shanghai 201206 (CN)
(74) Representative: Müller Hoffmann & Partner
(86) International application number: PCT/CN2023/120103
(87) International publication number: WO 2024/061282

(57) **Abstract**

Provided in the present invention are a method performed by user equipment (UE) and user equipment. The method performed by user equipment includes: determining that a bandwidth of an uplink BWP is not greater than a maximum channel bandwidth of the UE; and determining whether a random access (RA) resource on the BWP can be used for random access of the UE, the maximum channel bandwidth of the UE being determined by an eRedCap characteristic.

## Description

### TECHNICAL FIELD

The present invention relates to the technical field of wireless communications, and in particular to a method performed by user equipment, and corresponding user equipment.

### BACKGROUND ART

The instruction in this section facilitates a better understanding of various aspects of the present invention. Accordingly, the statements of this section are to be read in this light and are not to be understood as admissions about which are the prior art and which are not the prior art.

Several typical applications are defined in the 5G system. For example, industrial wireless sensor applications are focused on speeding up industrial transformation and digitization to achieve flexibility of industrial production processes, thereby improving productivity and efficiency, facilitating reduction in maintenance, improving operational safety, etc. Application of video monitoring devices to construction of intelligent cities facilitates better city management and services. Wearable devices may be used for intelligent services in various aspects such as medicine, life, etc. These applied devices are all expected to not be complex and have low power consumption to reduce costs and expand the range of applications. The bandwidth of some device types is reduced from 100 MHz to 20 MHz in R17, thereby reducing device costs. In order to further reduce the complexity of terminal devices, some new methods may be adopted, for example, reducing a peak data rate supported by these devices to around 10 Mbps, or further reducing the bandwidth of the user equipment from up to 20 MHz to up to 5 MHz. These methods or a combination thereof can further reduce the complexity and costs of the devices in different aspects. In addition, coexistence of these devices with other types of NR user equipment in the same cell must be considered to maintain the integrity of the ecology, thereby maximizing the scale of the ecology, and improving network efficiency. These new service requirements place some new requirements on existing NR networks. For example, in order for a network to support the data transmission bandwidth of the user equipment not exceeding 5 MHz, network configuration parameters or the resource parameters used when the terminal transmits data are required to satisfy relevant requirements. The related method of the present invention provides a good method for satisfying these device requirements in the network, and when the related constraint condition is satisfied, coexistence with the existing devices in the network can be ensured, thereby achieving good utilization efficiency of the network.

### SUMMARY OF THE INVENTION

In order to address at least part of the aforementioned issues, the present invention provides a method performed by user equipment, and user equipment, which can satisfy the requirements of a related device in a network for reducing a data transmission bandwidth and the requirement of ensuring coexistence with existing devices in the network, and achieve good utilization efficiency of the network.

According to the present invention, provided is a method performed by user equipment (UE), comprising: determining that a bandwidth of an uplink BWP is not greater than a maximum channel bandwidth of the UE; and determining whether a random access (RA) resource on the BWP can be used for random access of the UE, the maximum channel bandwidth of the UE being determined by an eRedCap characteristic.

According to the above method of the present invention, if a higher layer indicates that a procedure of the random access is eRedCap characteristic-related, then: in the case that at least one random access resource on the BWP is configured with an eRedCap indication, selecting, by the UE, the at least one random access resource as an available random access resource; and in the case that no random access resource on the BWP is configured with an eRedCap indication, if there is a random access resource configured with a RedCap indication, selecting, by the UE, the resource of the RedCap indication as an available random access resource; and otherwise, selecting, by the UE, a random resource not identified by any characteristic as an available random access resource.

According to the above method of the present invention, it is determined, according to a msgA configuration parameter configured by a network, whether a random access resource on the BWP and determined by the msgA configuration parameter is a resource available for 2-step random access (RA).

According to the above method of the present invention, it is determined, according to the number of RBs of each PUSCH resource block and a BWP subcarrier spacing (SCS) parameter in a msgA configuration configured by the network, whether resources corresponding to the msgA configuration are random access resources available to the UE.

According to the above method of the present invention, in the case that the number of RBs of each PUSCH resource block in the msgA configuration is less than or equal to a number threshold N, the resources corresponding to the msgA configuration can be used as available random access resources of the UE on the BWP, and in the case that the number of RBs of each PUSCH resource block in the msgA configuration is greater than N, the resources corresponding to the msgA configuration are not used as available random access resources of the UE on the BWP, the number threshold N being predefined by an eRedCap characteristic.

According to the above method of the present invention, in the case that the number of RBs of each PUSCH resource block in the msgA configuration is less than or equal to an RB number threshold N, the resources corresponding to the msgA configuration can be used as available random access resources of the UE on the BWP, and in the case that the number of RBs of each PUSCH resource block in the msgA configuration is greater than N, the resources corresponding to the msgA configuration can still be used as available random access resources of the UE on the BWP, and the UE uses a portion of the RBs for transmission of the PUSCH, the number threshold N being predefined by an eRedCap characteristic.

According to the above method of the present invention, in the case that the number of PUSCH RBs in the msgA configuration is greater than N, the number and position of RBs for the PUSCH transmission are determined according to a second number of RBs in the msgA configuration.

According to the above method of the present invention, in the case that the UE uses a portion of the RBs for transmission of the PUSCH, the method comprises: receiving a modulation and coding scheme (MCS) configured by the network; and determining a modulation order and a code rate according to the MCS and the number of RBs for the PUSCH transmission, so as to determine a TBS size for the PUSCH transmission.

According to the above method of the present invention, the TBS size for the PUSCH transmission is determined according to a second MCS determined by an indication of the network or determined by the UE according to the size of the portion of the RBs and the value of the MCS.

Furthermore, according to the present invention, provided is a user equipment, comprising: a processor; and a memory storing instructions, wherein the instructions, when run by the processor, perform the above method.

### Effect of Invention

According to the present invention, it is possible to satisfy the capability reduction requirements of a related device in a network and the requirement of ensuring coexistence with existing devices in the network, and achieve good utilization efficiency of the network.

### BRIEF DESCRIPTION OF THE DRAWINGS

The above and other features of the present invention will be more apparent from the following detailed description in combination with the accompanying drawings, in which:
FIG. 1 is a flowchart of a method performed by user equipment (UE) according to Embodiment 1 of the present invention.
FIG. 2 is a flowchart of a method performed by user equipment (UE) according to Embodiment 2 of the present invention.
FIG. 3 is a simplified structural block diagram of user equipment (UE) according to the present invention.

### DETAILED DESCRIPTION OF PREFERRED EMBODIMENTS

The following describes the present invention in detail with reference to the accompanying drawings and specific embodiments. It should be noted that the present invention should not be limited to the specific embodiments described below. These embodiments are merely provided as examples to convey the scope of the subject matter to those skilled in the art. In addition, detailed descriptions of well-known technologies not directly related to the present invention are omitted for the sake of brevity, in order to avoid obscuring the understanding of the present invention.

Typically, all terms used herein will be interpreted according to the ordinary meaning thereof in the related technical field unless different meanings are clearly presented and/or implied in the context where the terms are used. Unless explicitly stated otherwise, all references to an element, device, assembly, component, step, etc., shall be publicly interpreted as referring to at least one instance of the element, device, assembly, component, step, etc. The steps of any method disclosed herein do not need to be performed in the exact order disclosed unless one step has to be explicitly described as being after or before another step and/or one step has to be after or before another step as implied. In appropriate cases, any feature of any embodiment disclosed herein is applicable to any other embodiment. Likewise, any advantage of any embodiment is applicable to any other embodiment, and vice versa.

In the following description, a 5G/NR mobile communication system and later evolved versions thereof are used as exemplary application environments to describe a plurality of embodiments according to the present invention in detail. However, it is to be noted that the present invention is not limited to the following embodiments, but is applicable to many other wireless communication systems, such as a communication system after 5G, 4G and 3G mobile communication systems before 5G, and an 802.11 wireless network.

Some terms involved in the present invention are described below: If not specifically indicated, the terms involved in the present invention use the definitions herein. The terms given in the present invention may vary in LTE, LTE-Advanced, LTE-Advanced Pro, NR, and subsequent or other communication systems, but unified terms are used in the present invention. When applied to a specific system, the terms may be replaced with terms used in the associated system.
3GPP: 3rd Generation Partnership Project
LTE: Long Term Evolution
NR: New Radio
UE: User Equipment
gNB: NR base station
FR1: Frequency range 1 as defined in TS 38.104
FR2: Frequency range 2 as defined in TS 38.104
BWP: Bandwidth Part
SFN: System Frame Number
OFDM: Orthogonal Frequency Division Multiplexing
CP: Cyclic Prefix
TA: Timing Advance
SCS: Sub-Carrier Spacing
RB: Resource Block
RE: Resource Element
CRB: Common Resource Block
PRB: Physical Resource Block
VRB: Virtual Resource Block
REG: Resource Element Group
CCE: Control Channel Element
EPRE: Energy Per Resource Element
TDD: Time Division Duplexing
FDD: Frequency Division Duplexing
CSI: Channel State Information
DCI: Downlink Control Information
MCS: Modulation and Coding Scheme
CRC: Cyclic Redundancy Check
SFI: Slot Format Indication
QCL: Quasi Co-Location
HARQ: Hybrid Automatic Repeat Request
CORESET: Control Resource Set
MIB: Master Information Block
SIB: System Information Block
SIBl: System Information Block Type 1
SSB: SS/PBCH Block (Synchronization Signal/Physical Broadcast Channel Block)
PSS: Primary Synchronization Signal
SSS: Secondary Synchronization Signal
SRS: Sounding Reference Signal
DMRS: Demodulation Reference Signal
CSI-RS: Channel State Information Reference Signal
TRS: Tracking Reference Signal
RACH: Random-Access Channel
PBCH: Physical Broadcast Channel
PUCCH: Physical Uplink Control Channel
PUSCH: Physical Uplink Shared Channel
PRACH: Physical Random-Access Channel
PDSCH: Physical Downlink Shared Channel
PDCCH: Physical Downlink Control Channel
UL-SCH: Uplink Shared Channel
DL-SCH: Downlink Shared Channel
NZP-CSI-RS: Not-Zero-Power CSI-RS
C-RNTI: Cell Radio Network Temporary Identifier
P-RNTI: Paging RNTI
RA-RNTI: Random Access RNTI
CS-RNTI: Configured Scheduling RNTI
SI-RNTI: System Information RNTI
TC-RNTI: Temporary C-RNTI
RAR: Random Access Response
CSS: Common Search Space
RIV: Resource Indication Value

The following is a description of technologies associated with the solution of the present invention. Unless otherwise specified, the same terms in the specific embodiments have the same meanings as in the associated technologies.

It is worth pointing out that the user, the user equipment, and the terminal device in the specification of the present invention have the same meaning, and UE may also be used herein to represent user equipment, which will not be specifically differentiated or defined hereinafter. Similarly, network devices are devices that communicate with user equipment, and include, but are not limited to, a base station device, a gNB, an eNB, a wireless AP, a wireless relay, a terminal having a relay capability, etc., and will not be specifically differentiated or defined hereinafter. Herein, descriptions may be provided by using a base station as a form of a network device that is implemented, and in a specific implementation, other network device forms may be easily used for replacement.

A network node may configure a random access (RA) resource for a terminal, so that the terminal uses the same to perform random access in a cell. For example, the network configures 4-step random access resources for the terminal. When initiating random access, the terminal selects a PRACH occasion in the 4-step random access resources to transmit a PRACH preamble, then detects a PDCCH in a related search space, and receives a random access response message transmitted by a PDSCH scheduled by the PDCCH. The terminal transmits msg3 according to an uplink grant in the random access response message, and after msg3 is transmitted, detects, and receives a contention complete message transmitted by the base station, thereby completing the random access procedure. The network may also configure 2-step random access resources. When initiating a random access procedure by using 2-step access, the terminal transmits msgA to the base station. msgA transmitted by the terminal includes not only transmitting a PRACH preamble in a selected PRACH occasion but also transmitting a PUSCH on a PUSCH resource that has a mapping relationship with the preamble. Then, the terminal receives a response message msgB message transmitted by the base station, and determines, according to content of msgB, that the 2-step random access is successful or falls back to a 4-step access mode.

In the network, several 2-step random access resources and/or 4-step random access resources may be simultaneously configured on one BWP. When performing random access on the BWP, the terminal may select suitable 2-step or 4-step resources according to a certain rule to perform a related procedure.

For example, if both available 2-step and 4-step RA resources are present in a set of available RA resources on the BWP used by the terminal for an RA procedure, when RSRP of a downlink is greater than a configured threshold, the terminal selects 2-step RA as the RA type. Otherwise, the terminal selects 4-step RA. In another case, only 2-step RA is present on available RA resources on the BWP selected by the terminal for the RA procedure, the terminal selects 2-step RA. The terminal performs a corresponding random access procedure according to the selected RA type.

The terminal also follows a certain method when selecting, on the BWP, an RA resource set available for random access. For example, if a contention-free RA resource is not indicated for a current RA procedure, and the RA procedure is associated with a particular characteristic. If the terminal has no RA resource associated with a current characteristic in these resource sets provided by the network, the terminal selects a resource not associated with any characteristic as an RA resource used by the terminal to perform random access.

If the RA procedure is contention-free RA and the current RA procedure is a RedCap application indicated by a higher layer, and there is an RA resource configured with only a RedCap characteristic indication, the terminal selects the RA resource for the RA procedure.

For other cases, the terminal selects, for the RA procedure, an RA resource not associated with any characteristic indication.

The characteristic indication of use of RA resources includes a plurality of types, such as whether it is Msg3 repetition, whether it is RedCap, whether it is small data transmission (SDT), etc. When performing RA, the terminal may select a resource suitable for RA according to a characteristic indicated by a higher layer and applied to the RA procedure.

In the network, terminal complexity may be reduced by limiting the bandwidth used by the terminal for data channel transmission. For example, the terminal is restricted to only being able to use a terminal channel bandwidth not larger than 5 MHz to perform data transmission, so that the complexity of the terminal can be further reduced in modules such as reception and data processing and decoding module processing. In NR, the number of available PRBs in the terminal channel bandwidth with the bandwidth size of 5 MHz is related to a subcarrier spacing parameter SCS used by the bandwidth. For example, when the SCS is 15 kHz, the number of available PRBs in a 5 MHz bandwidth is 25, and when the SCS is 15 kHz, the number of available PRBs in the 5 MHz bandwidth is 11. In this case, the maximum number of PRBs used when using a data transmission bandwidth not larger than 5 MHz is related to the SCS, that is, is 25 or 11.

A terminal type is introduced in an NR system of R17, which may be identified as RedCap. A channel transmission bandwidth used by a RedCap terminal in the FR1 band is not greater than 20 MHz. To facilitate the related description below, in the present invention, eRedCap is used as an identifier of a terminal that further limits a transmission bandwidth of a shared channel to not greater than 5 MHz and the transmission bandwidth of other channels to not greater than 20 MHz in the FR1 frequency band. Other identifiers may be used in the network to identify this type of terminal without affecting the essence of the related method.

To ensure coexistence with devices in existing networks, the bandwidth configured for shared channel data transmission in the networks may be greater than the maximum bandwidth supported by eRedCap terminals. In this case, when an eRedCap terminal performs data transmission, it is necessary to ensure that the bandwidth capability of the terminal cannot be exceeded. The present invention provides an appropriate method to enable eRedCap user equipment to coexist with other types of user equipment in the same cell and to satisfy relevant service requirements.

Embodiments of the present invention are described in detail below. In the following, unless explicitly stated otherwise, the user equipment or terminal refers to such eRedCap user equipment with a limited bandwidth capability.

### [Embodiment 1]

Related procedures will be described in detail below.

In an NR system, when a bandwidth of eRedCap user equipment is limited to reduce the complexity of the terminal, different bandwidth limiting methods may be used for a shared channel and a control channel. For example, the control channel may use a maximum UE channel bandwidth of 20 MHz, and the shared channel may use a maximum UE channel bandwidth of 5 MHz. In this way, implementation complexity of the user equipment can be reduced by using a smaller bandwidth to transmit data by using a shared channel. In addition, performance of the control channel is not degraded due to bandwidth limitation, and good compatibility with the existing network configuration can be maintained.

The number of available RBs related to the channel bandwidth capability of the user equipment may be determined by the bandwidth size and the SCS parameter. For example, when the SCS is 15 kHz, the number of available RBs in the UE channel bandwidth of 20 MHz is 106, and the number of available RBs in the UE channel bandwidth of 5 MHz is 25. If the channel bandwidth of the user equipment on the shared channel is limited to not greater than 5 MHz, the number of RBs used thereby for transmission on the shared channel is not greater than 25. When the SCS used in the bandwidth is 30 kHz, the number of available RBs in the UE channel bandwidth of 5 MHz is 11. If the channel bandwidth of the user equipment on the shared channel is limited to not greater than 5 MHz, the number of RBs used for transmission on the shared channel is not greater than 11. These parameters are typical values in various cases, and the essence of the present invention is not affected when different defined values are used in the system.

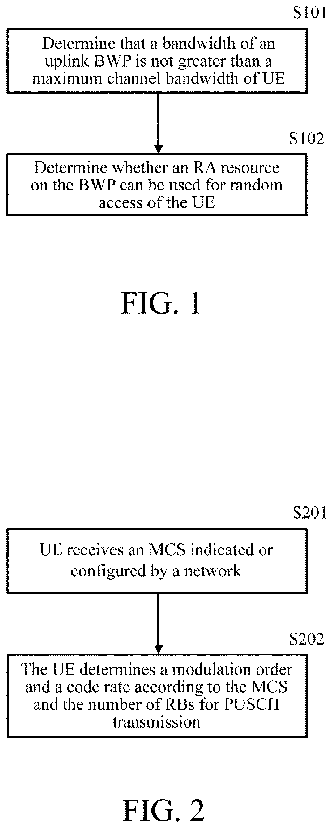

FIG. 1 is a flowchart of a method performed by user equipment (UE) according to Embodiment 1 of the present invention.

As shown in FIG. 1, when selecting a random access (RA) resource, a terminal first determines a BWP for initiating a random access (RA) procedure. Specifically, in step S101, a terminal determines that a bandwidth of an uplink BWP is not greater than a maximum channel bandwidth of UE, for example, a bandwidth of less than 20 MHz, and in step S102, the terminal determines whether an RA resource on the BWP is available for random access of the terminal (and a used RA type). The maximum channel bandwidth of the UE is determined by an eRedCap characteristic.

Optionally, the terminal performs a contention-based RA procedure, and the terminal determines that the RA procedure is eRedCap characteristic-related according to a higher layer indication. If at least one RA resource on the BWP selected by the terminal for the RA procedure is configured with an eRedCap indication, the terminal selects the RA resource as an available RA resource. If no RA resource on the BWP is configured with an eRedCap indication, and an RA resource on the BWP is configured with a RedCap indication, the terminal selects the resource of the RedCap indication as an available RA resource. Otherwise, the terminal selects an RA resource not identified by any characteristic as an available RA resource.

A msgA configuration parameter MsgA-ConfigCommon is used in the NR network to configure 2-step RA resources for the terminal. MsgA-ConfigCommon may include two parameter sets respectively denoted as rach-ConfigCommonTwoStepRA and msgA-PUSCH-Config. rach-ConfigCommonTwoStepRA is used to configure parameters for PRACH preamble(s) used in 2-step access, and msgA-PUSCH-Config is used to configure parameters for PUSCH(s) used in the 2-step access, including an MCS parameter msgA-MCS, starting positions of time domain and frequency domain resources, the number nrofPRBs-PerMsgA-PO of RBs of each PUSCH resource block, etc. The configurable value of nrofPRBs-PerMsgA-PO is an integer M ranging from 1 to 32. That is, when the terminal uses a 2-step access resource to perform random access, PUSCH transmission is performed by using a resource block formed by M RBs. When performing a 2-step RA procedure, the terminal selects a PRACH preamble and an associated PUSCH resource block to transmit msgA.

An eRedCap terminal needs to select an RA resource such that the bandwidth of the resource used to transmit the PUSCH does not exceed the bandwidth capability of the terminal to transmit shared data.

Optionally, in addition to determining the available RA resource according to the characteristic indication of the RA resource, the terminal further determines, according to the msgA configuration parameter, whether the RA resource determined by the msgA configuration parameter on the BWP is a resource available for 2-step RA.

Optionally, the terminal determines, according to the number of RBs in the PUSCH resource block and a subcarrier spacing (SCS) parameter of an UL BWP where the PUSCH is located in the msgA configuration parameter, whether resources corresponding to the msgA configuration are RA resources available for the terminal.

Specifically, the terminal determines an RB number threshold N according to the subcarrier spacing (SCS) parameter of the UL BWP. When the number of RBs of the PUSCH resource block in the msgA configuration is greater than N, the RA resources corresponding to the msgA configuration are not used as available RA resources of the terminal on the BWP. When the number of RBs of the PUSCH resource block is less than or equal to N, the resources corresponding to the msgA configuration can be used as available RA resources of the terminal on the BWP.

Optionally, the terminal determines a predefined value of N according to the subcarrier spacing (SCS) parameter of the UL BWP where the PUSCH is located. For example, when the SCS is 15 kHz, the value of N is 25, and when the SCS is 30 kHz, the value of N is 11. Other values of N satisfying the bandwidth limitation of 5 MHz may also be defined in the system, which is not limited herein.

Optionally, the terminal determines the value of N according to a higher layer configuration parameter. For example, the network defines, in a BWP parameter, the values of N for different SCS by using an enumeration method. Specifically, enumerated values SCS15k_25, SCS30_12, SCS30_11, etc., are defined, and respectively correspond to N = 25 when the SCS of the BWP is 15 kHz, N = 12 when the SCS of the BWP is 30 kHz, N = 11 when the SCS of the BWP is 30 kHz, etc. The terminal may acquire a specific value of N via an enumerated value indicated by a parameter of the BWP.

Optionally, when the terminal determines that the number M of RBs of the PUSCH resource block in the msgA configuration is less than or equal to N, resources corresponding to the msgA configuration may be used as available RA resources of the terminal on the BWP. When the number M of RBs of the PUSCH resource block of the terminal in the msgA configuration is greater than N, the resources corresponding to the msgA configuration can still be used as available RA resources of the terminal on the BWP, and the terminal uses a portion of the RBs in the PUSCH resource block associated with the selected PRACH preamble for transmission of msgA. For example, the terminal uses consecutive N RBs starting from the smallest sequence number of the resource block for transmission of the msgA message. In this way, the terminal can use the RA resources to transmit msgA under the condition that the bandwidth of the configured PUSCH resource block is greater than the bandwidth limit of the terminal for transmitting the shared data channel, thereby achieving compatibility with other types of terminals and reducing system complexity. Accordingly, the base station may perform detection via blind detection, for example, using a TB parameter determined by the bandwidth corresponding to N RBs and a TB parameter determined according to the configured bandwidth M RBs. When a PUSCH with a correct CRC check is detected, reception is considered correct.

Optionally, when the number M of RBs of the PUSCH resource block of the terminal in the msgA configuration is greater than N, the terminal determines resources corresponding to the msgA configuration as available RA resources of the terminal on the BWP according to a second RB parameter. Specifically, when the terminal determines that the number M of RBs of the PUSCH is greater than N, the terminal may determine, according to a second number of RBs in the msgA configuration message, the number and position of RBs for the PUSCH transmission. Optionally, a second configuration is a number K of RBs, and the terminal uses K consecutive RBs starting from the smallest sequence number of the resource block as resources for PUSCH transmission. Optionally, the second configuration includes the number K of RBs and a starting position in the resource block, for example, indicated by the value of an RIV. The terminal determines, according to the starting position, consecutive K RBs as resources for PUSCH transmission.

Optionally, when the number M of RBs of the PUSCH resource block of the terminal in the msgA configuration is greater than N, and when the msgA configuration indicates that the PUSCH is transmitted by using frequency hopping, the terminal may perform PUSCH transmission by using different RB sequence numbers in a first hop and a second hop. For example, N consecutive RBs in ascending order starting from the smallest sequence number of the resource block are used in the first hop, and N consecutive RBs in descending order starting from the largest sequence number of the resource block are used in the second hop. In this way, the terminal can achieve a better frequency diversity gain.

When performing random access, a RedCap terminal may also share, with the eRedCap terminal, a random access channel identified by the eRedCap characteristic, thereby multiplexing system resources.

Optionally, the RedCap terminal performs a contention-based RA procedure. If it is indicated by a higher layer that the RA procedure is RedCap characteristic-related, and if at least one RA resource on the BWP is configured with a RedCap indication, the terminal selects the at least one RA resource as an available RA resource of the RedCap terminal. If no RA resource on the BWP is configured with a RedCap indication, and an RA resource on the BWP is configured with an eRedCap indication, the terminal selects the resource of the eRedCap indication as an available RA resource. Otherwise, the terminal selects an RA resource not identified by any characteristic as an available RA resource.

### [Embodiment 2]

FIG. 2 is a flowchart of a method performed by user equipment (UE) according to Embodiment 2 of the present invention.

As shown in FIG. 2, a network includes a plurality of parameters in a msgA message configuration for the terminal to determine a relevant transmission parameter, for example, including an MCS. In step 201, a terminal receives an MCS indicated or configured by a network, and in step S201, the terminal determines, according to the number of RBs of a PUSCH for transmitting msgA and the MCS, a modulation order and a code rate for transmitting the PUSCH.

A terminal in an NR network may determine, according to a predetermined MCS table via an MCS sequence number value configured by the network, parameters such as a modulation order and a code rate for data channel transmission. An example of the MCS table is as shown by Table 1.

**Table 1: MCS sequence number table for PUSCH application for supporting precoding and 64 QAM**

| MCS sequence number *I_{MCS}* | Modulation order *Qₘ* | Target code rate R × 1024 | Spectral efficiency SE |
|---|---|---|---|
| 0 | q | 240/q | 0.2344 |
| 1 | q | 314/q | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 466 | 2.7305 |
| 18 | 6 | 517 | 3.0293 |
| 19 | 6 | 567 | 3.3223 |
| 20 | 6 | 616 | 3.6094 |
| 21 | 6 | 666 | 3.9023 |
| 22 | 6 | 719 | 4.2129 |
| 23 | 6 | 772 | 4.5234 |
| 24 | 6 | 822 | 4.8164 |
| 25 | 6 | 873 | 5.1152 |
| 26 | 6 | 910 | 5.3320 |
| 27 | 6 | 948 | 5.5547 |
| 28 | q | reserved | |
| 29 | 2 | reserved | |
| 30 | 4 | reserved | |
| 31 | 6 | reserved | |

The network configures an MCS sequence number via a DCI indication or higher layer signaling, and the terminal can find, in the MCS table, parameters such as a modulation order, a code rate, and the spectral efficiency of a TB used for transmitting a shared data channel.

The terminal may determine a related MCS table according to an indication of the network. For example, when a precoding mode of the PUSCH is set to not perform precoding, the terminal uses a first MCS table to determine code rates and modulation orders corresponding to different MCS sequence numbers. When the precoding mode of the PUSCH is set to use precoding, the terminal uses a second MCS table to determine code rates and modulation orders corresponding to different MCS sequence numbers.

When configuring 2-step RA resources, the network configures, via a msgA parameter, the MCS sequence number for transmitting the PUSCH. The terminal may determine a corresponding modulation order and code rate according to the MCS sequence number. The terminal may also determine the number of symbols for PUSCH transmission, the number of symbols and pattern of a DMRS, etc., according to other parameters in the msgA configuration. The terminal may obtain the total number of REs available for PUSCH transmission on the resource block according to these parameters and the number of RBs of the PUSCH resource block. The terminal determines, according to the number of REs, the modulation order, the code rate, etc., the TB block size TBS for PUSCH transmission.

When the number M of RBs of the PUSCH resource block of the terminal in the msgA configuration is greater than the number N of RBs of a transmission bandwidth of a shared channel of the terminal, the eRedCap terminal may use part of the bandwidth to transmit the msgA message. That is, when the PUSCH is not transmitted by using all of the RBs of the selected resource block, if the same other configuration parameters are still used, the TBS size that can be used by the terminal is smaller than the TBS determined by the parameter configured by the network, resulting in the message size of msgA that is capable of being transmitted being smaller than the TBS corresponding to the parameter configured by the network.

Optionally, when the terminal determines to transmit the PUSCH by using part of the bandwidth, the terminal determines the TBS size by using a second MCS parameter. The terminal determines, according to the determined number of RBs for PUSCH transmission and a second MCS value, the TBS for PUSCH transmission of msgA.

Optionally, the terminal determines the second MCS according to an indication of the network. The terminal uses the second MCS in the msgA configuration parameter to determine the modulation scheme and the code rate used for PUSCH transmission to determine the TBS size.

Optionally, when the terminal determines that the second MCS is present in the msgA configuration parameter, the terminal uses the second MCS to determine the TBS size, otherwise, the terminal determines the TBS size according to the configured MCS and the number of RBs for PUSCH transmission.

Optionally, when the second MCS is not present in the msgA configuration parameter, the terminal determines the second MCS according to the number of RBs for PUSCH transmission and the value of the MCS, and determines the modulation scheme and the code rate used for PUSCH transmission.

Exemplarily, the terminal determines a value Y according to the configured number of RBs, the number of RBs used for partial transmission, and the spectral efficiency value SE corresponding to the configured MCS sequence number, where Y = SE * N/X. The terminal selects the first MCS sequence number from the determined MCS table in ascending order of the MCS sequence numbers as the second MCS, so that the SE value corresponding to the MCS sequence number is greater than or equal to the value Y. Optionally, when the determined second MCS sequence number is greater than 15, the terminal determines to use 15 as the second MCS sequence number. The terminal determines, according to the determined second MCS, the modulation scheme and the code rate used for PUSCH transmission to determine the TBS size.

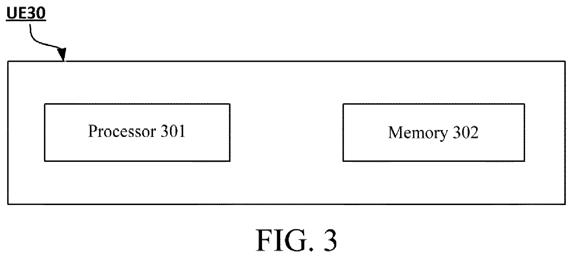

Hereinafter, FIG. 3 is used to illustrate user equipment that can perform the method performed by a user equipment described in detail above in the present invention as a variant embodiment.

FIG. 3 shows a block diagram of user equipment (UE) according to the present invention.

As shown in FIG. 3, user equipment (UE) 30 includes a processor 301 and a memory 302. The processor 301 may include, for example, a microprocessor, a microcontroller, an embedded processor, and the like. The memory 302 may include, for example, a volatile memory (such as a random access memory (RAM)), a hard disk drive (HDD), a non-volatile memory (such as a flash memory), or other memories, etc. The memory 302 has program instructions stored thereon. The instructions, when run by the processor 301, can perform the above method performed by user equipment described in detail in the present invention.

The method and related equipment according to the present invention have been described above in combination with preferred embodiments. It should be understood by those skilled in the art that the method shown above is only exemplary, and the above-described embodiments can be combined with one another as long as no contradiction arises. The method of the present invention is not limited to the steps or sequences illustrated above. The network node and user equipment illustrated above may include more modules. For example, the network node and user equipment may further include modules that can be developed or will be developed in the future to be applied to a base station, an MME, or UE, and the like. Various identifiers illustrated above are only exemplary, and are not meant to be limiting. The present invention is not limited to specific information elements serving as examples of these identifiers. Those skilled in the art could make various alterations and modifications according to the teachings of the illustrated embodiments.

It should be understood that the above-described embodiments of the present invention may be implemented by software, hardware, or a combination of software and hardware. For example, various components in the base station and user equipment in the above embodiments can be implemented by multiple devices, and these devices include, but are not limited to: an analog circuit device, a digital circuit device, a digital signal processing (DSP) circuit, a programmable processor, an application-specific integrated circuit (ASIC), a field-programmable gate array (FPGA), a complex programmable logic device (CPLD), and the like.

In the present application, the "base station" may refer to a mobile communication data and control exchange center having large transmission power and a wide coverage area, including functions such as resource allocation and scheduling and data reception and transmission. The term "user equipment" may refer to user mobile terminals, such as terminal devices that can wirelessly communicate with a base station or a micro base station, including a mobile phone, a laptop computer, and the like.

In addition, the embodiments of the present invention disclosed herein may be implemented on a computer program product. More specifically, the computer program product is a product provided with a computer-readable medium having computer program logic encoded thereon. When executed on a computing device, the computer program logic provides related operations to implement the above technical solutions of the present invention. When executed on at least one processor of a computing system, the computer program logic causes the processor to perform the operations (the method) described in the embodiments of the present invention. Such setting of the present invention is typically provided as software, codes and/or other data structures provided or encoded on the computer-readable medium, e.g., an optical medium (e.g., a CD-ROM), a flexible disk, or a hard disk, and the like, or other media such as firmware or micro codes on one or more ROM or RAM or PROM chips, or a downloadable software image, a shared database, and the like in one or more modules. Software or firmware or such configuration may be installed on a computing device such that one or more processors in the computing device performs the technical solutions described in the embodiments of the present invention.

In addition, each functional module or each feature of the base station device and the user equipment used in each of the above embodiments may be implemented or executed by a circuit, which is usually one or more integrated circuits. Circuits designed to execute various functions described in this description may include general-purpose processors, digital signal processors (DSPs), application-specific integrated circuits (ASICs) or general-purpose integrated circuits, field-programmable gate arrays (FPGAs) or other programmable logic devices, discrete gates or transistor logic, discrete hardware components, or any combination of the above devices. The general-purpose processor may be a microprocessor, or the processor may be an existing processor, a controller, a microcontroller, or a state machine. The aforementioned general-purpose processor or each circuit may be configured by a digital circuit or may be configured by a logic circuit. Furthermore, when advanced technology capable of replacing current integrated circuits emerges due to advances in semiconductor technology, the present invention can also use integrated circuits obtained using this advanced technology.

While the present invention has been illustrated in combination with the preferred embodiments of the present invention, it will be understood by those skilled in the art that various modifications, substitutions, and alterations may be made to the present invention without departing from the spirit and scope of the present invention. Therefore, the present invention should not be limited by the above-described embodiments, but should be defined by the appended claims and their equivalents.

## Claims

1. A method performed by user equipment (UE), comprising:
determining whether a random access (RA) resource on a BWP is capable of being used for random access of the UE, and
if a higher layer indicates that a procedure of the random access is eRedCap characteristic-related, then:
in the case that at least one random access resource on the BWP is configured with an eRedCap indication, selecting, by the UE, the at least one random access resource as an available random access resource; and
in the case that no random access resource on the BWP is configured with an eRedCap indication,
if there is a random access resource configured with a RedCap indication, selecting, by the UE, the resource of the RedCap indication as an available random access resource; and
otherwise, selecting, by the UE, a random resource not identified by any characteristic as an available random access resource.

2. The method according to claim 1, wherein,
the UE further determines, according to a msgA configuration parameter configured by a network, whether the random access resource on the BWP and determined by the RedCap indication is a resource available for the UE to perform 2-step random access (RA).

3. The method according to claim 2, wherein,
the UE determines, according to the number of RBs of each PUSCH resource block and a BWP subcarrier spacing (SCS) parameter in a msgA configuration configured by the network, whether resources corresponding to the msgA configuration are random access resources available to the UE.

4. The method according to claim 3, wherein,
in the case that the number of RBs of each PUSCH resource block in the msgA configuration is less than or equal to a number threshold N, the resources corresponding to the msgA configuration are capable of being used as available random access resources of the UE on the BWP, and
in the case that the number of RBs of each PUSCH resource block in the msgA configuration is greater than N, the resources corresponding to the msgA configuration are not used as available random access resources of the UE on the BWP,
the number threshold N being predefined by an eRedCap characteristic.

5. The method according to claim 3, wherein,
in the case that the number of RBs of each PUSCH resource block in the msgA configuration is less than or equal to an RB number threshold N, the resources corresponding to the msgA configuration are capable of being used as available random access resources of the UE on the BWP, and
in the case that the number of RBs of each PUSCH resource block in the msgA configuration is greater than N, the resources corresponding to the msgA configuration are still capable of being used as available random access resources of the UE on the BWP, and the UE uses a portion of the RBs for transmission of the PUSCH,
the number threshold N being predefined by an eRedCap characteristic.

6. The method according to claim 5, wherein,
in the case that the number of PUSCH RBs in the msgA configuration is greater than N,
the number and position of RBs for the PUSCH transmission are determined according to a second number of RBs in the msgA configuration.

7. The method according to claim 5, wherein,
in the case that the UE uses a portion of the RBs for transmission of the PUSCH,
the method comprises:
receiving a modulation and coding scheme (MCS) configured by the network; and
determining a modulation order and a code rate according to the MCS and the number of RBs for the PUSCH transmission, so as to determine a TBS size for the PUSCH transmission.

8. The method according to claim 7, wherein,
the TBS size for the PUSCH transmission is determined according to a second MCS determined by an indication of the network or determined by the UE according to the size of the portion of the RBs and the value of the MCS.

9. User equipment, comprising:
a processor; and
a memory, having instructions stored therein,
wherein the instructions, when run by the processor, perform the method according to any one of claims 1 to 8.
